# EUROPÄISCHE PATENTSCHRIFT

(11) **EP 1 510 399 B1**
(45) Veröffentlichungstag und Bekanntmachung des Hinweises auf die Patenterteilung: **07.05.2008**
(21) Anmeldenummer: 04019534.9
(22) Anmeldetag: 18.08.2004
(51) Int. Cl.: B60P 3/32, B60P 3/40, B62D 21/12, B62D 21/14, B62D 29/04

(54) **Wohnmobil mit heckseitig verlängertem Fahrgestell**
Mobile home with rear chassis extension
Maison mobile avec une prolongement arrière du châssis

(30) Priorität: 28.08.2003 DE 10340018
(43) Veröffentlichungstag der Anmeldung: 02.03.2005
(73) Patentinhaber: Goldschmitt techmobil AG, 74746 Höpfingen (DE)
(72) Erfinder: Mairon, Markus, 74731 Walldürn (DE); Goldschmitt, Dieter, 74746 Höpfingen (DE)
(74) Vertreter: Pöhner, Wilfried Anton, Dr.

(56) Entgegenhaltungen:
- DE-A- 4 103 102
- US-A- 6 099 061
- US-A1- 2004 148 778
- US-A1- 2004 174 031
- US-B1- 6 257 638

## Beschreibung

Die Erfindung betrifft ein Wohnmobil mit Fahrgestell, das eine heckseitige Verlängerung aufweist.

Die Wohnaufbauten von Wohnmobilen ragen in der Regel weit über die Hinterachse und das Chassis des Trägerfahrzeuges hinaus. Daher ist es erforderlich das Fahrgestell nach hinten zu verlängern. Nach dem Stand der Technik, siehe Dokument DE 4 103 102 A, besteht diese Verlängerung aus Stahlbauteilen. Nachteiligerweise ergibt sich dadurch für das Fahrzeug oft eine drastische Erhöhung des Gesamtgewichtes. Da die erforderliche Fahrerlaubnis vom Gesamtgewicht des Fahrzeugs abhängt, kann sich eine Verlängerung des Fahrgestells bei bestimmten Fahrzeugtypen verkaufseinschränkend auswirken. Nach der Straßenverkehrsordnung dürfen nur Fahrzeuge mit einem Gesamtgewicht bis zu 3,5 t mit einem PKW- Führerschein gefahren werden; bei Fahrzeugen mit höherem Gewicht muss ein LKW- Führerschein vorliegen. Nachteiligerweise hat wohl der geringste Teil der Wohnmobiltouristen einen LKW-Führerschein.

Die Aufgabe der Erfindung besteht in der Schaffung einer heckseitigen Fahrgestellverlängerung für Wohnmobile, die bei Bedarf auch als Anhängevorrichtung dienen kann, aus einem leichtem und zugleich zugfesten Werkstoff.

Zur Lösung der Aufgabe wird eine Fahrgestellverlängerung konstruiert, die dadurch gekennzeichnet ist, dass sie aus Elementen besteht, deren Querschnitt einen äußeren Mantel aus faserverstärktem Kunststoff (Kunststoffmantel) und im Inneren einen Kern aufweist, der aus vorgefertigtem faserverstärktem Kunststoff von beliebigem Querschnitt oder aus einem anderen Material von beliebigem Querschnitt besteht.
Der Kern im Inneren der Fahrgestellverlängerung dient als Gerüst zur Aufbringung der Carbonfaserschichten des Mantels, die bei unterschiedlicher Ausrichtung in einer Kunststoffmatrix fixiert werden. Dabei ist die Form des Kerns beliebig, d.h. der Kern muss nicht aus einem langgestreckten Profil bestehen, sondern kann auch Biegungen aufweisen. Auch das Querschnittsprofil des Kerns ist variabel. Nach dem Aushärten des Kunststoffmantels kann der Kern im Inneren der Fahrgestellverlängerung verbleiben oder bei geradlinigen Kernen auch wieder entfernt werden.

In einer besonders bevorzugten Ausführungsform besteht der Kern aus einem Profil mit zylindrischem oder hohlzylindrischem Querschnitt. Dabei ist besonders vorteilhaft, dass Querschnitte mit abgerundeter Außenform eine bestmögliche Verteilung der Zug- und Druckbelastung auf den gesamten Querschnitt erlauben. Insbesondere bei Profilen mit kantenaufweisenden Querschnitten kann es nachteiligerweise zu einer Konzentration der Spannungslinien z. B. im Kantenbereich kommen. Diese Vorzüge weist neben der zylindrischen Außenform auch die ovale Außenform aus, die ebenfalls zum Aufbau der erfindungsgemäßen Fahrgestellverlängerung vorgesehen ist.

Die Verwendung eines vollzylindrischen Kerns verhindert das Zusammenpressen der Fasermatten, wenn die Fahrgestellverlängerung mit einer in senkrechter Richtung durch den Querschnitt verlaufenden Schraube am originärem Fahrgestell oder an einem entsprechenden Verbindungselement befestigt wird.

Es liegt im Rahmen der Erfindung, dass der Kern der Fahrgestellverlängerung aus Holz, Schaumstoff oder einem Metall wie z.B. Aluminium oder Stahl besteht. Die Verwendung von Aluminium und Stahl kann die Zugfestigkeit erhöhen, wenn diese Kerne von den Befestigungselementen bei Befestigung der Fahrgestellverlängerung am originärem Fahrgestell durchgriffen werden. Der Vorteil der Gewichtsverringerung wird dabei am ehesten durch Aluminium erfüllt. Alternativ sind aber auch Kerne denkbar, die aus einem vorgefertigten und bereits ausgehärteten Carbonfaserprofil bestehen. Der Vorteil solcher Kerne besteht darin, dass sie nach einer Wärmebehandlung verformbar sind und so vor dem Aufbringenen des faserverstärkten Mantels auf den wieder abgekühlten Kern in die für die Fahrgestellverlängerung vorgesehene Form, z.B. U- oder V-Form, gebracht werden können.

In einer Weiterbildung der Erfindung ist vorgesehen, dass der äußere Kunststoffmantel eine einheitliche oder eine unterschiedliche Stärke aufweist. Die Verstärkung des Kunststoffmantels an Stellen mit hoher Zug- oder Druckbelastung lassen sich durch Computersimulationen berechnen und unterstützen die Herstellung der Fahrgestellverlängerung. Bei Fahrgestellverlängerungen, deren Kern nicht aus Carbonfasern bestehen, wird in der Regel zunächst ein Kunststoffmantel von einheitlicher Stärke aufgebracht. Bevor zur Erhöhung der Zugund Druckfestigkeit in bestimmten Bereichen zusätzliche Lagen von Kohlestoffasern aufgebracht werden. Falls der Kern aus vorgefertigten Carbonfaserprofilen besteht, ist die Aufbringung zusätzlicher in Kunststoff gebetteter Carbonfaserschichten auf jene Bereiche der Fahrgestellverlängerung denkbar, in denen die Belastung besonders hoch ist.

Natürlich legen die Vorteile von Kohlefaserwerkstoffen die Herstellung der Fahrgestellverlängerung aus einem Stück nahe. Prinzipiell ist, bei Nutzung entsprechender Verbindungselemente zwischen den Bestandteilen der Fahrgestellverlängerung, auch ein mehrteiliger Aufbau denkbar.

In einer bevorzugten Ausführungsform ist die erfindungsgemäße Fahrgestellverlängerung so konstruiert, dass der Fahrzeugaufbau auf der Fahrgestellverlängerung aufliegt. Eine derartige Fahrgestellverlängerung muss insbesondere der Druckbelastung durch den Fahrzeugaufbau standhalten. Die Zonen besonderer Belastung, die durch zusätzliche Carbonfaserschichten in einer entsprechenden Matrix aus Kunststoff verstärkt werden können, sind natürlich nicht identisch mit den Zonen besonderer Belastung einer Fahrgestellverlängerung, die insbesondere auf Zugspannung ausgerichtet ist.

Erhöhter Zugbelastung muss die erfindungsgemäße Fahrgestellverlängerung insbesondere dann standhalten, wenn sie, wie dies in einer besonders bevorzugten Ausführungsform vorgesehen ist, als Anhängevorrichtung ausgebildet ist.

Natürlich ist denkbar, dass die Fahrgestellverlängerung in einer Weiterbildung sowohl als Anhängevorrichtung ausgebildet ist, als auch als Auflage für den Fahrzeugaufbau dient. In diesem Fall müssen sowohl die Zonen der Zug- als auch der Druckbelastung besonders verstärkt werden. Es liegt im Rahmen der Erfindung, dass die Form der Fahrgestellverlängerung variabel ist. Besonders bevorzugt ist eine V- oder U-Form, wobei die auslaufenden Schenkel zur Befestigung der Fahrgestellverlängerung am originären Fahrgestell vorgesehen sind. Dabei soll die Befestigung an mindestens 2 Punkten erfolgen. Prinzipiell denkbar ist auch, dass die Fahrgestellverlängerung durch eine schräg nach unten verlaufende Strebe abgestützt wird.

In einer bevorzugten Ausführungsform sind die Enden der Schenkel der Fahrgestellverlängerung so gestaltet, dass der faserverstärkte Kunststoff an den zur Befestigung am originären Fahrgestell vorgesehenen Stellen flächig anliegt. Die Verbindung zwischen dem originären Fahrgestell und der Fahrgestellverlängerung erfolgt vorzugsweise durch Schrauben. Natürlich sind darüber hinaus auch die anderen dem Fachmann bekannten Mittel zur Herstellung einer entsprechenden Verbindung anwendbar. Zur Verstärkung der Befestigung kann der metallische Kern an den zur Befestigung am originärem Fahrgestell vorgesehenen Enden der Fahrgestellverlängerung in die zur Befestigung vorgesehenen Montageflächen übergehen, die beispielsweise nach Art eines Flansches geformt sein könnte. Dadurch wird vorteilhafterweise eine Verbindung mit noch höherer Zugund Druckfestigkeit zwischen Fahrgestell und Fahrgestellverlängerung erreicht.

Im Rahmen der Erfindung werden faserverstärkte Kunststoffe verwendet, wobei als Fasern Aramidfasern oder Carbonfasern oder Glasfasern bevorzugt werden. Carbonfasern werden auch Kohlestoffasern genannt. Der Preis der Carbonfasern liegt zwischen dem der Aramidfasern und dem der kostengünstigen Glasfasern. Besonders hoch ist die Zugfestigkeit der Aramidfaser Kevlar.

Es versteht sich von selbst, dass die verschiedenen Fasertypen auch in den unterschiedlichsten Kombinationen einsetzbar sind. Beim Bau von Fahrradrahmen, hat sich z. B. bewährt, dass die spröden Carbonfasern mit der Aramidfaser, die eine besonders hohe Zugfestigkeit und Zähigkeit aufweist, kombiniert wird. Weitere vorteilhafte Kombinationen von Fasergeweben sind im Zusammenhang mit der erfindungsgemäßen Fahrgestellverlängerung vorgesehen.

Es liegt im Rahmen der Erfindung, dass die Ausrichtung der Fasern in den Faserlagen zu einer Vielzahl vorteilhafter Weiterbildungen führt. Eine Möglichkeit besteht darin, dass man die Fasern um den Kern spinnt und bevor man das Gewebe mit dem Kunststoffharz tränkt. Mit dieser Bauart sind die besonderen Vorteile von der Verwendung von Fasern allerdings bei weitem noch nicht ausgereizt.

Besonders vorteilhaft ist die Verwendung von Fasern, wenn man diese entlang der Kraftflussrichtungen innerhalb der Fahrgestellverlängerung auslegt. Auf diese Weise kann an wenig belasteten Stellen Material und damit Gewicht eingespart werden, während an stark beanspruchten Stellen Material d.h. Fasern zugegeben werden kann. Computersimulationen können helfen die Stellen besonders starker Beanspruchung zu identifizieren.

In einer Weiterbildung der erfindungsgemäßen Fahrgestellverlängerung ist vorgesehen, dass die Faserverstärkungen mehrdirektional also in verschiedenen Richtungen ausgerichtet sind. Denkbar ist z.B., dass die unteren Lagen der Faserverstärkung unidirektional und die darüberliegenden Lagen mehrdirektional ausgerichtet sind. Im Bereich der Fahrgestellverlängerung mit besonders hoher Zugbelastung weisen die Faser eine einheitliche Ausrichtung auf, die in der Regel mit der Längsachse des Kerns zusammenfällt.

Die weitere Vielseitigkeit der Kunststoffasern besteht darin, dass die zur Faserverstärkung eingesetzten Fasern zu Garnen gesponnen werden und alleine oder in Kombination mit Fasern zur Herstellung des Fahrgestells verwendet werden können. Darüber hinaus ist denkbar, dass die aus den Fasergarnen geflochtenen Gebilde wie z.B. Matten oder Schläuche zur Faserverstärkung eingesetzt werden. Auch hier sind wiederum Kombinationen aus den unterschiedlichsten Fasertypen, d.h. Glasfasern, Carbonfasern und Aramidfasern denkbar.

Unterschiedliche Ausgestaltungsformen der erfindungsgemäßen Fahrgestellverlängerung ergeben sich auch aus der Verwendung verschiedener Kunststoffe für die Einbettung der Fasern. Die Kunststoffmatrix zur Einbettung der Fasern besteht aus Duroplasten oder Thermoplasten. Als Duroplaste kommen insbesondere die bekannten Epoxid- Harze und Polyester sowie Phenol- und Cyanatester in Frage. Als besonders vorteilhafte Thermoplaste können Polyamide, Polyimide oder Polyphenylsulfiden eingesetzt werden.

Im folgenden sollen weitere Einzelheiten und Merkmale der erfindungsgemäßen Fahrgestellverlängerung anhand von Beispielen näher erläutert werden. Die abgebildeten Bespiele sollen die Erfindung jedoch nicht einschränken, sondern diese nur erläutern. Es zeigen in schematischer Darstellung:
- Figur 1: Fahrgestellaufsichten
- Figur 2: Querschnitt durch das Profil der Fahrgestellverlängerung

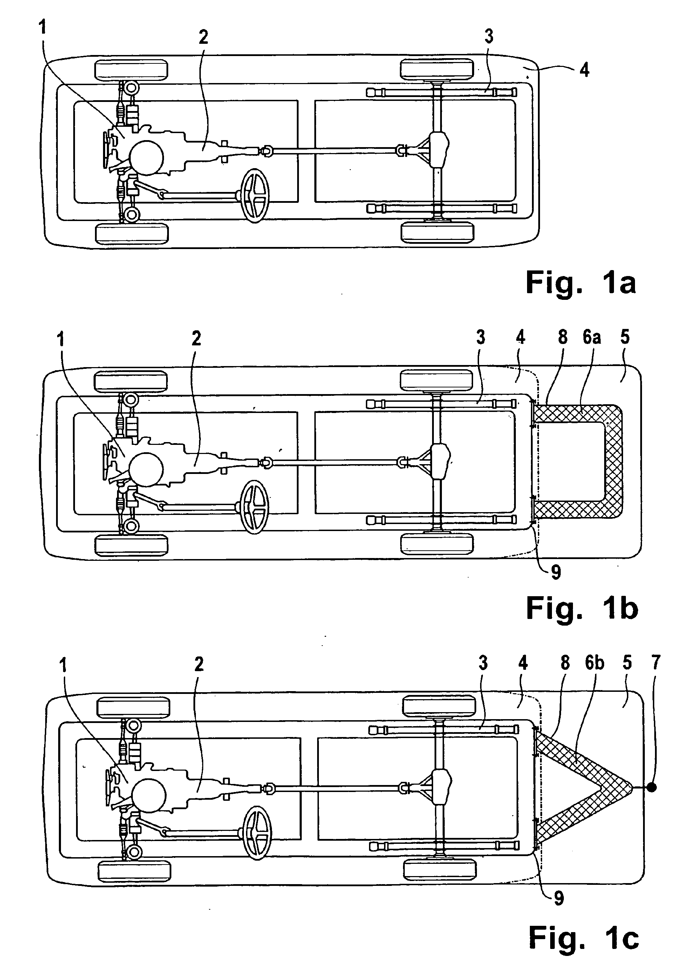

Figur 1a zeigt die Aufsicht auf ein Fahrzeug in prinzipienhafter Darstellung, dessen Aufbau 4 nicht verlängert ist und deshalb nicht über das Fahrgestell 3 hinausragt. Motor 1 und Getriebe 2 sind bei diesem Fahrzeug wie bei Wohnmobilen im Frontbereich.

In Figur 1b ist ein Fahrzeug mit verlängertem Aufbau 5 gezeigt. Der Aufbau 5 geht weit über den Bereich des originären Fahrgestells 3 hinaus. Zur Unterstützung des verlängerten Aufbaus 5 wurde am originären Fahrgestell 3 eine Fahrgestellverlängerung 6a angebracht. Die Fahrgestellverlängerung 6a weist an den beiden Schenkeln 8 Montageflächen 9 auf, die der Fixierung der Fahrgestellverlängerung 6a am originären Fahrgestell 3 dienen.

Figur 1c zeigt eine Fahrgestellverlängerung 6b, die aus der Aufsicht eine V-Form aufweist und heckseitig als Anhängevorrichtung 7 ausgebildet ist. Die Fahrgestellverlängerung 6b wird an den beiden Schenkeln 8, die mit flächigen Montagevorrichtungen neu versehen sind mittels Schrauben am originären Fahrgestell 3 befestigt.

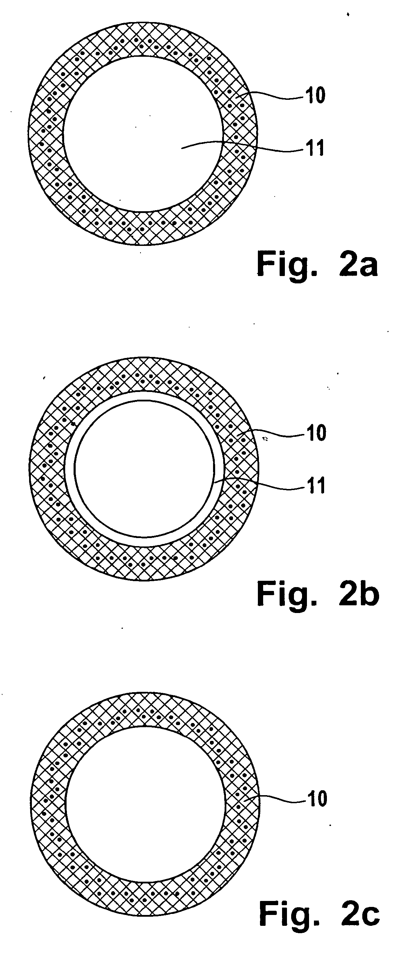

In Figur 2a ist der Querschnitt durch eine Fahrgestellverlängerung gezeigt, die einen zylindrischen Kern 11 aufweist. Der zylindrische Kern 11 wird von einem faserverstärkten Kunststoffmantel 10 umgeben. Die Schraffur und die Punkte im Querschnittsbereich des Mantels 10 soll andeuten, dass die Fasern in verschiedene Richtungen ausgerichtet sein können.

Figur 2b zeigt analog zu Figur 2a den Querschnitt durch das Profil einer möglichen Fahrgestellverlängerung, die einen hohlzylindrischen Kern 11 aufweist, der von einem faserverstärkten Kunststoffmantel 10 umgeben wird.

In Figur 2c ist der Querschnitt durch eine alternative Ausführungsform der erfindungsgemäßen Fahrgestellverlängerung gezeigt. Bei dieser Fahrgestellverlängerung wurde nach dem Aushärten des faserverstärkten Kunststoffmantels 10 der Kern entfernt.

## Patentansprüche

1. Wohnmobil mit Fahrgestell (3), das eine heckseitige Verlängerung (6a, 6b) aufweist, **dadurch gekennzeichnet, dass** die Fahrgestellverlängerung (6a, 6b) aus Elementen besteht, deren Querschnitt einen äußeren Mantel (10) aus faserverstärktem Kunststoff (10) und im Inneren einen Kern (11) aufweist, der aus vorgefertigtem faserverstärktem Kunststoff von beliebigem Querschnitt oder aus einem anderen Material von beliebigem Querschnitt besteht.

2. Wohnmobil nach Anspruch 1, **dadurch gekennzeichnet, dass** der Kern (11) aus einem Profil mit zylindrischem oder hohlzylindrischem Querschnitt besteht.

3. Wohnmobil nach Anspruch 1 und 2, **dadurch gekennzeichnet, dass** der Kern (11) der Fahrgestellverlängerung (6a, 6b) aus Holz, Schaumstoff, Aluminium, Stahl oder einem vorgefertigten Carbonfaserprofil besteht.

4. Wohnmobil nach Anspruch 1, 2 und 3, **dadurch gekennzeichnet, dass** der Mantel aus faserverstärktem Kunststoff (10) der Fahrgestellverlängerung (6a, 6b) eine einheitliche oder eine unterschiedliche Stärke aufweist.

5. Wohnmobil nach einem der vorhergehenden Ansprüche, **dadurch gekennzeichnet, dass** die Fahrgestellverlängerung (6a, 6b) einstückig ist.

6. Wohnmobil nach einem der vorhergehenden Ansprüche, **dadurch gekennzeichnet, dass** ein Fahrzeugaufbau (5) auf der Fahrgestellverlängerung (6a, 6b) aufliegt.

7. Wohnmobil nach einem der vorhergehenden Ansprüche, **dadurch gekennzeichnet, dass** die Fahrgestellverlängerung (6a, 6b) heckseitig als Anhängevorrichtung ausgebildet ist.

8. Wohnmobil nach einem der vorhergehenden, **dadurch gekennzeichnet, dass** ein Fahrzeugaufbau (5) auf der Fahrgestellverlängerung (6a, 6b) aufliegt und die Fahrgestellverlängerung (6a, 6b) heckseitig als Anhängevorrichtung (7) ausgebildet ist.

9. Wohnmobil nach einem der vorhergehenden Ansprüche, **dadurch gekennzeichnet, dass** die Fahrgestellverlängerung (6a, 6b) eine U- (6a) oder V-Form (6b) aufweist und die Befestigung der auslaufenden Schenkel (8) am originären Fahrgestell (3) an mindestens zwei Punkten erfolgt.

10. Wohnmobil nach einem der vorhergehenden Ansprüche, **dadurch gekennzeichnet, dass** die Fahrgestellverlängerung (6a, 6b) durch eine oder mehrere Querstreben abgestützt wird, die mit dem heckseitigen Teil der Fahrgestellverlängerung (6a, 6b) und einem tiefer liegenden Bestandteil des originären Fahrgestells (3) verbunden sind.

11. Wohnmobil nach einem der vorhergehenden Ansprüche, **dadurch gekennzeichnet, dass** der faserverstärkte Kunststoffmantel an den zur Befestigung am originären Fahrgestell (3) vorgesehen Enden der Fahrgestellverlängerung (6a, 6b) jeweils in eine Montagefläche (9) übergeht.

12. Wohnmobil nach einem der vorhergehenden Ansprüche, **dadurch gekennzeichnet, dass** der metallische Kern (11) und/oder Abschnitte des Mantels aus faserverstärktem Kunststoff (10) an den zur Befestigung am originären Fahrgestell (3) vorgesehen Enden der Fahrgestellverlängerung (6a, 6b) jeweils in mindestens eine Montagefläche (9) übergehen.

13. Wohnmobil nach einem der vorhergehenden Ansprüche, **dadurch gekennzeichnet, dass** als Fasern Aramidfasern oder Carbonfasern oder Glasfasern eingesetzt werden.

14. Wohnmobil nach einem der vorhergehenden Ansprüche, **dadurch gekennzeichnet, dass** als Fasern Kombinationen aus Aramidfasern und/oder Carbonfasern und/oder Glasfasern eingesetzt werden.

15. Wohnmobil nach einem der vorhergehenden Ansprüche, **dadurch gekennzeichnet, dass** die Fasern in der Kunstoffmatrix des äußeren Mantels (10) mehrdirektional ausgerichtet sind.

16. Wohnmobil nach einem der vorhergehenden Ansprüche, **dadurch gekennzeichnet, dass** die Fasern in der Kunstoffmatrix des äußeren Mantels (10) sowohl unidirektional als auch mehrdirektional ausgerichtet sind, wobei die Faserverstärkung in Achsrichtung der Fahrgestellverlängerung (6a, 6b) insbesondere unidirektional ausgerichtet ist.

17. Wohnmobil nach einem der vorhergehenden Ansprüche, **dadurch gekennzeichnet, dass** die Fasern in der Kunstoffmatrix des äußeren Mantels (10) aus Fasern und/oder aus zu Garnen gesponnenen Fasern bestehen.

18. Wohnmobil nach einem der vorhergehenden Ansprüche, **dadurch gekennzeichnet, dass** die Fasern in der Kunstoffmatrix des äußeren Mantels (10) aus geflochtenen Gebilden wie Matten und Schläuchen bestehen, die aus Fasern und/oder Fasergarnen hergestellt wurden.

19. Wohnmobil nach einem der vorhergehenden Ansprüche, **dadurch gekennzeichnet, dass** als Kunststoffmatrix Duroplaste oder Thermoplaste eingesetzt werden.

20. Wohnmobil nach einem der vorhergehenden Ansprüche, **dadurch gekennzeichnet, dass** die Duroplastmatrix aus Epoxiden, Phenolester oder Cyanatestern besteht.

21. Wohnmobil nach einem der Ansprüche 1 bis 13, **dadurch gekennzeichnet, dass** die Thermoplastmatrix aus Polyamiden, Polyimiden, Polyetherketonen oder Polyphenylsulfiden besteht.

## Claims

1. Mobile home with chassis (3), which has a tail extension (6a, 6b) **characterised in that** the chassis extension (6a, 6b) consists of elements whose cross section has an outer sheath (10) of fibre-reinforced plastic (10) and, in the interior, has a core (11) that is made of prefabricated fibre-reinforced plastic of arbitrary cross section or of another material of arbitrary cross section

2. Mobile home according to claim 1, **characterised in that** the core (11) consists of a profile with cylindrical or hollow cylindrical cross section.

3. Mobile home according to claims 1 and 2, **characterised in that** the core (11) of the chassis extension (6a, 6b) is made of wood, foam, aluminium, steel or a prefabricated carbon fibre profile.

4. Mobile home according to claims 1, 2 and 3, **characterised in that** the sheath of fibre-reinforced plastic (10) of the chassis extension (6a, 6b) has a uniform or variable thickness.

5. Mobile home according to one of the preceding claims, **characterised in that** the chassis extension (6a, 6b) is of one piece.

6. Mobile home according to one of the preceding claims, **characterised in that** a vehicle superstructure (5) rests on the chassis extension (6a, 6b).

7. Mobile home according to one of the preceding claims, **characterised in that** a chassis extension (6a, 6b) is formed as a coupling at the tail end.

8. Mobile home according to one of the preceding claims, **characterised in that** a vehicle superstructure (5) rests on the chassis extension (6a, 6b) and the chassis extension (6a, 6b) is designed as a coupling (7) at the tail end.

9. Mobile home according to one of the preceding claims, **characterised in that** the chassis extension (6a, 6b) has a U (6a) or V (6b) shape, and the fastening of the trailing flank (8) on the original chassis (3) takes place at at least two points.

10. Mobile home according to one of the preceding claims, **characterised in that** the chassis extension (6a, 6b) is supported by one or more cross struts, which are connected to the tail part of the chassis extension (6a, 6b) and to a lower-lying component of the original chassis (3).

11. Mobile home according to one of the preceding claims, **characterised in that** the fibre-reinforced plastic sheath on those ends of the chassis extension (6a, 6b) which are provided for fastening on the original chassis (3) in each case merge into a mounting face (9).

12. Mobile home according to one of the preceding claims, **characterised in that** metal core (11) and/or sections of the fibre-reinforced plastic sheath (10), at those ends of the chassis extension (6a, 6b) intended for fastening on the original chassis (3), in each case merge into at least one mounting face (9).

13. Mobile home according to one of the preceding claims, **characterised in that** aramid fibres or carbon fibres or glass fibres are used as fibres..

14. Mobile home according to one of the preceding claims, **characterised in that** combinations of aramid fibres and/or carbon fibres and/or glass fibres are used as fibres.

15. Mobile home according to one of the preceding claims, **characterised in that** the fibres in the plastic matrix of the outer sheath (10) are multidirectionally oriented.

16. Mobile home according to one of the preceding claims, **characterised in that** the fibres in the plastic matrix of the outer sheath (10) are oriented both unidirectionally and multidirectionally, the fibre reinforcement being in particular unidirectionally oriented in the axial direction of the chassis extension (6a, 6b).

17. Mobile home according to one of the preceding claims, **characterised in that** the fibres in the plastic matrix of the outer sheath (10) consist of fibres and/or of fibres spun into yarns.

18. Mobile home according to one of the preceding claims, **characterised in that** the fibres in the plastic matrix of the outer sheath (10) consist of woven structures such as mats and tubes, which have been produced from fibres and/or fibre yarns.

19. Mobile home according to one of the preceding claims, **characterised in that** thermosets or thermoplastics are used as plastic matrix.

20. Mobile home according to one of the preceding claims, **characterised in that** the thermoset matrix consists of epoxides, phenolic esters or cyanate esters.

21. Mobile home according to one of claims 1 to 13, **characterised in that** the thermoplastic matrix consists of polyamides, polyimides, polyether ketones or polyphenylene sulphides.

## Revendications

1. Mobilhome avec châssis (3) présentant une rallonge à l'arrière (6a, 6b), **caractérisé par le fait que** la rallonge de châssis est constituée d'éléments dont la section présente un manteau extérieur (10) en plastique renforcé de fibres (10) et à l'intérieur un noyau (11) composé de plastique renforcé dé fibres préfabriqué ayant une section quelconque ou d'un autre matériau ayant une section quelconque.

2. Mobilhome selon la revendication 1, **caractérisé par le fait que** le noyau (11) est composé d'un profilé à section cylindrique au cylindrique creux.

3. Mobilhome selon les revendications 1 et 2, **caractérisé par le fait que** le noyau (11) de la rallonge de châssis est composé de bois, de mousse, d'aluminium, d'acier ou d'un profilé préfabriqué en fibres de carbone.

4. Mobilhome selon les revendications 1 et 2 et 3, **caractérisé par le fait que** le manteau en plastique renforcé de fibres (10) de la rallonge de châssis (6a, 6b) présente une épaisseur uniforme ou variable.

5. Mobilhome selon une des revendications précédentes, **caractérisé par le fait que** la rallonge de châssis (6a, 6b) est d'une seule pièce.

6. Mobilhome selon une des revendications précédentes, **caractérisé par le fait qu'**une superstructure de véhicule (5) repose sur la rallonge de châssis (6a, 6b).

7. Mobilhome selon une des revendications précédentes, **caractérisé par le fait que** la rallonge de châssis (6a, 6b) prend à l'arrière la forme d'un dispositif de remorque.

8. Mobilhome selon une des revendications précédentes, **caractérisé par le fait qu'**une superstructure de véhicule (5) repose sur la rallonge de châssis (6a, 6b) et que la rallonge de châssis (6a, 6b) prend à l'arrière la forme d'un dispositif de remorque (7).

9. Mobilhome selon une des revendications précédentes, **caractérisé par le fait que** la rallonge de châssis (6a, 6b) présente une forme en U (6a) ou en V(6b) et que la fixation des renforts finissants (8) s'effectue sur le châssis d'origine (3) en au moins deux points.

10. Mobilhome selon une des revendications précédentes, **caractérisé par le fait que** la rallonge de châssis (6a, 6b) est soutenue par un ou plusieurs tirants qui sont reliés à la partie arrière de la rallonge de châssis (6a, 6b) et avec un composant situé plus bas du châssis d'origine (3).

11. Mobilhome selon une des revendications précédentes, **caractérisé par le fait que** le manteau en plastique renforcé de fibres se transforme progressivement en une surface de montage (9) aux extrémités de la rallonge de châssis (6a, 6b) prévues pour la fixation au châssis d'origine (3).

12. Mobilhome selon une des revendications précédentes, **caractérisé par le fait que** le noyau métallique (11) et/ou des sections du manteau en plastique renforcé de fibres (10) se transforme à chaque fois en au moins une surface de montage (9) aux extrémités de la rallonge de châssis (6a, 6b) prévues pour la fixation sur le châssis d'origine (3).

13. Mobilhome selon une des revendications précédentes, **caractérisé par le fait qu'**on utilise, pour les fibres, des fibres d'aramide, des fibres de carbone ou des fibres de verre.

14. Mobilhome selon une des revendications précédentes, **caractérisé par le fait qu'**on utilise, pour les fibres, des combinaisons de fibres d'aramide et/ou de fibres de carbone et/ou des fibres de verre.

15. Mobilhome selon une des revendications précédentes, **caractérisé par le fait que** les fibres dans la matrice en plastique du manteau extérieur (10) est orienté de façon multidirectionnelle.

16. Mobilhome selon une des revendications précédentes, **caractérisé par le fait que** les fibres dans la matrice en plastique du manteau extérieur (10) sont orientées tant de façon unidimensionnelle que multidimensionnelle, sachant que le renforcement des fibres est surtout orienté de façon unidimensionnelle dans la direction de l'axe de la rallonge de châssis (6a, 6b).

17. Mobilhome selon une des revendications précédentes, **caractérisé par le fait que** les fibres dans la matrice en plastique du manteau extérieur (10) sont composées de fibres et/ou de fibres tissés en fils.

18. Mobilhome selon une des revendications précédentes, **caractérisé par le fait que** les fibres dans la matrice en plastique du manteau extérieur (10) sont composées de constructions telles que des et des flexibles ayant été fabriqués à partir de fibres et/ou de fils de fibres.

19. Mobilhome selon une des revendications précédentes, **caractérisé par le fait que** des duroplastes ou des thermoplastes sont utitisés en tant que matrice en plastique.

20. Mobilhome selon une des revendications précédentes, **caractérisé par le fait que** la matrice en duroplastes est composée d'époxydes, de phénolesters ou d'esters de cyanate.

21. Mobilhome selon une des revendications 1 à 13, **caractérisé par le fait que** la matrice en thermoplastes est composée de polyamides, de polyimides, de polyéthercétone ou de sulfures de polyphényl.
